# EUROPÄISCHE PATENTSCHRIFT

(11) **EP 0 736 877 B1**
(45) Veröffentlichungstag und Bekanntmachung des Hinweises auf die Patenterteilung: **31.05.2000**
(21) Anmeldenummer: 96105110.9
(22) Anmeldetag: 29.03.1996
(51) Int. Cl.: G21C 9/016

(54) **Kernschmelzeauffangvorrichtung mit Wasserverdrängunganordnung**
Fused nuclear core catcher device comprising a water displacement arrangement
Dispositif pour capter un coeur nucléaire fondu comprenant un arrangement de déplacement à eau

(30) Priorität: 05.04.1995 DE 19512286
(43) Veröffentlichungstag der Anmeldung: 09.10.1996
(73) Patentinhaber: SIEMENS AKTIENGESELLSCHAFT, 80333 München (DE)
(72) Erfinder: Wistuba, Lothar, 91074 Herzogenaurach (DE); Hollmann, Josef, 96132 Schlüsselfeld (DE); Bittermann, Dietmar, 90765 Fürth (DE)

(56) Entgegenhaltungen:
- WO-A-92/11642
- WO-A-94/29876
- DE-A- 2 653 258
- US-A- 5 307 390

## Beschreibung

Die Erfindung bezieht sich auf eine Anordnung zur Wasserverdrängung in einer unterhalb eines Reaktordruckbehälters (RDB) liegenden Kammer zum Auffangen von Kernschmelze, mit einem Füllkörper gemäß dem Oberbegriff des Anspruchs 1 (US 5,307,390).

Im Rahmen neuerer Sicherheitsüberlegungen beim Bau von Kernreaktoren wird im Gegensatz zur früheren Sicherheitsphilosophie ein Kernschmelzunfall nicht generell ausgeschlossen. Bei einem derartigen Unfall können Dampfexplosionen auftreten, die durch schlagartig entstehenden Wasserdampf entstehen. Dies kann auftreten, wenn durch einen beschädigten RDB-Boden Kernschmelze mit dem Kühlwasser in Kontakt kommt. Es besteht daher das Bestreben, solche Unfälle - auch wenn sie sehr unwahrscheinlich sind - zu beherrschen.

Aus der deutschen Offenlegungsschrift DE 43 19 094 A1 ist eine Einrichtung bekannt, die eine unterhalb des RDB angeordnete Vorkammer umfaßt, welche über einen Kanal an eine Ausbreitungskammer angeschlossen ist. Am Kanal liegt eine Schott- oder Trennwand, die den Kanal zunächst verschließt und in einer vorgegebenen Zeitspanne nach Eintreffen von Kernschmelze von dieser durch Schmelzen zerstört wird. Die Kernschmelze kann dann durch den Kanal in die Ausbreitungskammer ausfliessen.

Um eine Dampfexplosion innerhalb der Vorkammer zu verhindern, ist dort vorgesehen, die Vorkammer mit einem einteiligen Füllkörper auszustatten, der als dünnwandiger Hohlkörper ausgeführt ist. Dadurch wird ein Ausfließen des Wassers in die Vorkammer verhindert, wodurch wiederum eine Dampfexplosion beim Austreten der Kernschmelze verhindert ist. Der Füllkörper wird dabei von der Kernschmelze durch Schmelzen zerstört, so daß die Vorkammerfunktion für die Kernschmelze voll erhalten ist. Angaben zur näheren praktischen Ausführung des Füllkörpers sind dort jedoch nicht gemacht.

Der in der US 5,307,390 verwendete Füllkörper ist massiv und bevorzugt aus Beton gefertigt. Er soll den Boden der dartigen Kammer Schützen.

Der Erfindung liegt die Aufgabe zugrunde, eine zweckmäßige Lösung für eine Anordnung mit einem Füllkörper für eine Kammer in einer Reaktorgrube anzugeben.

Die Aufgabe wird erfindungsgemäß mit einer Anordung gemäß Anspruch 1 gelöst.

Auf diese Weise ist eine praktikable Lösung gegeben, die sich gegebenenfalls auch zur Nachrüstung bei bestehenden Anlagen eignet, bei denen die unterhalb des RDB angeordnete Kammer zugänglich ist. Mit Vorteil kann der Füllkörper nämlich stückchenweise in die Vorkammer eingebracht und aus der Kammer auch entfernt werden, so daß der RDB auch für nachträgliche Wartungsarbeiten, z. B. wiederkehrende Prüfungen im Bodenbereich oder Reparaturen, zugänglich ist.

Die Teilfüllkörper sind durch einen Kanal zur Vorkammer ein- oder ausbringbar.

Die Teilfüllkörper, die sich im Bereich des kalottenförmigen Bodens des RDBs befinden, können kreissektor- oder kreisringsektorförmig ausgebildet sein. Dadurch weisen die Teilfüllkörper eine Form auf, die sich einfach herstellen läßt und gut in die Kammer einbringbar ist. Durch ihre einfache Geometrie lassen sich derartige Teilfüllkörper auch einfach herstellen.

Der von den Teilfüllkörpern gebildete Füllkörper füllt die Kammer bevorzugt formschlüssig aus. Damit ist ein Optimum an Füllfunktion gegeben.

Bevorzugt weist der Füllkörper einen Füllfaktor von mindestens 80 %, beispielsweise 85 bis 98 %, speziell ca. 90%, des Kammervolumens (Kammergröße) auf. Auf diese Weise ist eine Dampfexplosion sicher verhindert. Die verbleibende Restwassermenge liegt dabei mit Vorteil unter 4 m³.

Beispielsweise ist die in der Kammer verbleibende Restwassermenge kleiner als 2 m³, z.B. kleiner als 1 m³, speziell circa 0,5 m³. Dieses Restwasser kann dabei in den engen Spalten zwischen den Teilfüllkörpern verbleiben. Durch die Verteilung des Restwassers auf das große Raumvolumen der Kammer ist ein kontinuierliches Verdampfen erreicht, wodurch wiederum das Auftreten einer Dampfexplosion verhindert ist.

Bevorzugt sind die Teilfüllkörper als Hohlkörper ausgebildet. Sie weisen dadurch ein geringes Gewicht auf und sind daher auch leicht und schnell transportierbar, was insbesondere für das Einbringen oder Ausbringen in bzw. aus die/der Kammer wichtig ist. Dabei ist es günstig, wenn die Teilfüllkörper aus Metall oder Glas gefertigt sind. Ihre Herstellung ist dabei besonders einfach, wobei die Schmelzfunktion beim Austreten der Kernschmelze vorgegeben ist.

Die als Hohlkörper ausgebildeten Teilfüllkörper können auch mit einem Füllstoff, beispielsweise mit einem Gas oder einem wasserbindenden Mittel, gefüllt sein. Auf diese Weise kann mit einem geeigneten Füllstoff eine günstige Wirkung auf den Schadensverlauf genommen werden. Gegebenenfalls kann dadurch beispielsweise auch eine kühlende Wirkung zur Verhinderung einer Dampfexplosion erzielt werden.

Alternativ können die Teilfüllkörper auch aus einem porösen Material, einem Schaum oder einem keramischen, gebrannten oder gesinterten Material oder aus einem betonartigen Material gefertigt sein. Es ist ein mineralisches Material denkbar, zum Beispiel Beton. Die Oberfläche der Teilfüllkörper sollte jedoch geschlossen sein, so daß kein Wasser in sie eindringen kann. Derartige Teilfüllkörper lassen sich besonders einfach und preiswert herstellen.

Der Füllkörper hat beispielsweise eine Schmelztemperatur zwischen 100° C und 2000° C.

Die Erfindung, weitere Vorteile und Details werden nachfolgend beispielhaft anhand der Zeichnung näher erläutert. Es zeigen:
- FIG 1: einen Schnitt durch eine Reaktorgrube entlang der Linie A-A von FIG 2;
- FIG 2: einen Schnitt durch die Reaktorgrube entlang der Linie E-E von FIG 1;
- FIG 3: die Reaktorgrube in einem Schnitt entlang der Linie C-C von FIG 2.

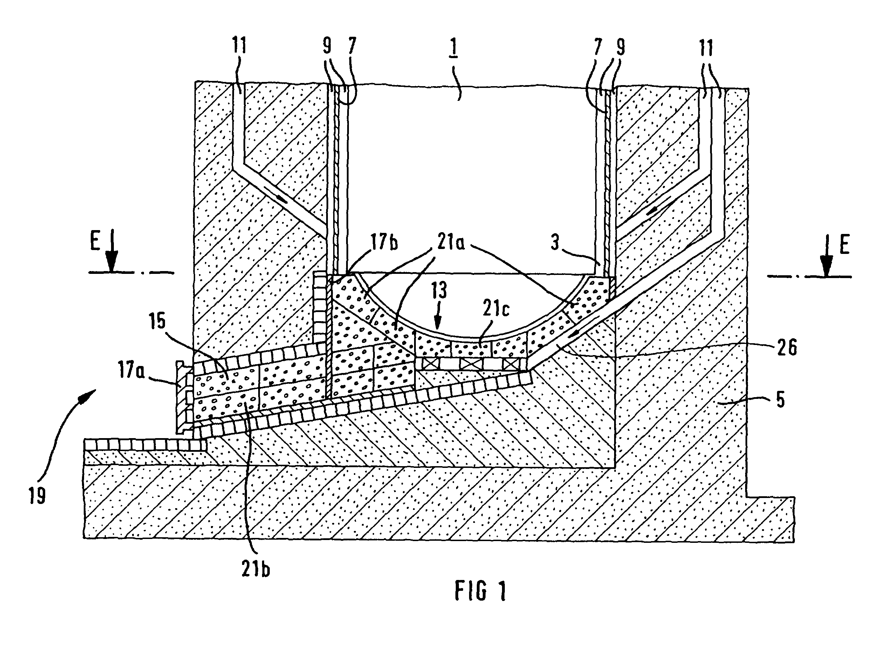

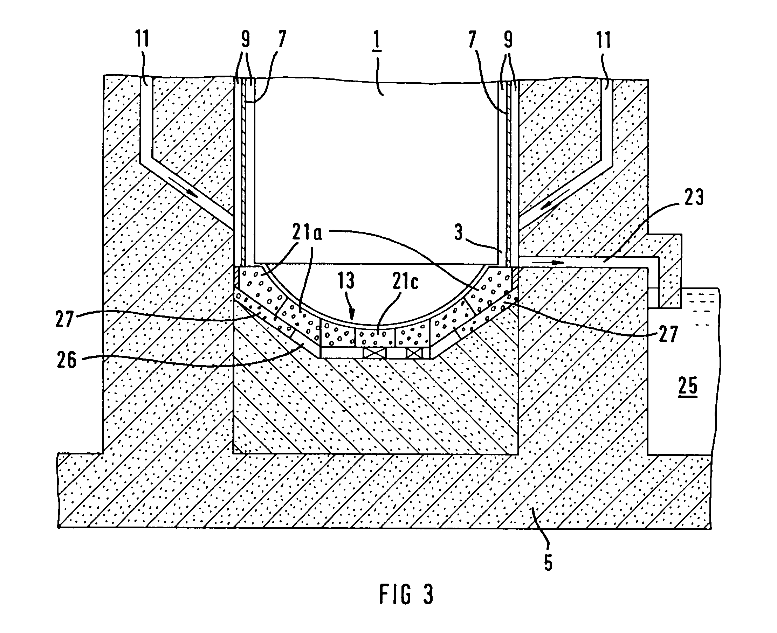

Nach FIG 1 und 3 ist ein Reaktordruckbehälter (RDB) 1 in einer Seitenansicht gezeigt, welcher sich in einer Reaktorgrube 3 befindet. Die Reaktorgrube 3 ist dabei von einem Betonfundament 5 gebildet. Zwischen dem RDB 1 und seiner äußeren Ummantelung ist eine Isolierung 7 angeordnet. Zur Belüftung der freien Zwischenräume 9 können gegebenenfalls Belüftungskanäle 11 vorgesehen sein.

Unterhalb des RDB 1 ist eine Kammer, speziell eine Vorkammer 13, angeordnet, die zum Auffangen von Kernschmelze aus dem RDB 1 im Störfall dient. Ihr nachgeschaltet ist ein Kanal 15, wobei dieser ein- und ausgangseitig mit einer Schott- oder Trennwand 17a, 17b versehen ist, die beim Austreten von Kernschmelze zerstört werden und ein Ausfließen der Kernschmelze in die benachbarte Ausbreitungskammer 19 ermöglichen. Die Schott- oder Trennwand 17a,17b wird auch als Tragschildaustritt bezeichnet.

Wenn im Störfall der RDB 1 verletzt wird, so kann zunächst Wasser aus ihm austreten. Dies kann beispielsweise bei einem Fehler an der Hauptkühlmittelleitung auftreten. Dabei ist es unerwünscht, daß sich das Wasser im Bodenbereich der Reaktorgrube 3 ansammelt, da beim Austritt der heißen Kernschmelze aus dem RDB-Boden rasch eine Dampfexplosion entstehen kann.

Der RDB 1 weist eine Anordnung auf, welche einen Füllkörper 21 als wesentliches Element zur Wasserverdrängung hat. Vorliegend ist die Vorkammer 13 und der Kanal 15 mit dem Füllkörper 21 ausgefüllt, der sich aus einer Vielzahl von Teilfüllkörpern 21a bis 21c zusammensetzt. Dabei ist vorgesehen, daß der Füllkörper 21 die vorliegenden Hohlräume der Vorkammer 13 derart ausfüllt, daß ein möglichst großer Füllfaktor gegeben ist. Dieser sollte möglichst über 80 %, insbesondere 90 bis 98 %, speziell circa 90%, betragen. Die dabei in der Kammer verbleibende Restwassermenge sollte deutlich unter 4m³, insbesondere bei 1m³, optimal bei 0,5m³ liegen. Auf diese Weise ist das plötzliche Entstehen einer großen Dampfmenge verhindert. Das Restwasser kann sich gegebenenfaalls auf die engen Spalten zwischen den Teilfüllkörpern 21a bis 21c verteilen.

Oberhalb der Vorkammer 13 ist ein Überlauf 23 angeordnet, durch den das verdrängte Wasser in ein Reservoir 25 geleitet wird. Das Wasser ist damit außerhalb des gefährdeten Bereichs. Ein Nachfließen und ein langsames Verdampfen ist damit verhindert.

Die Teilfüllkörper 21a, 21c sind dabei in ihrer Form derart ausgestaltet, daß sie die Vorkammer 13 formschlüssig ausfüllen. Das bedeutet im vorliegenden Beispiel, daß sie beispielsweise nach oben der kalottenartigen Form des Bodens des RDB 1 angepaßt sind und nach unten eine tiegelartige Form aufweisen. Im Bereich des Kanals 15 weisen die Teilfüllkörper 21b eine gescherte Rechteckform auf. Die Teilfüllkörper sind sind dabei bausteinartig aneinanderfügbar, so daß eine Füllkörpereinheit gebildet ist.

Wesentlich für den vorliegenden Füllkörper ist, daß die Teilfüllkörper 21a, 21b derart dimmensioniert sind, daß sie durch den Kanal 15 ein- oder ausbringbar sind. Das gilt auch für die Teilfüllkörper 21a,21c, die direkt unterhalb des RDB 1 angeordnet sind. Dies ist insbesondere günstig, wenn nachträglich Wartungsarbeiten am RDB 1 ausgeführt werden sollen. Die Teilfüllkörper 21a, 21b können so auf einfache Weise entfernt werden. Sie weisen bevorzugt eine Größe auf, die vom Personal gut handhabbar sind.

Es ist auch denkbar, daß die Teilfüllkörper 21a,21b,21c Mittel aufweisen, mit denen sie fest miteinander verbunden werden können, z. B. eine Rast- oder Steckverbindung. Um einen problemlosen Einbau zu gewährleisten, können die Teilfüllkörper 21a bis 21c auch mit einer Numerierung oder einer mechanischen Codierung versehen sein, so daß kein fehlerhafter Einbau entsteht.

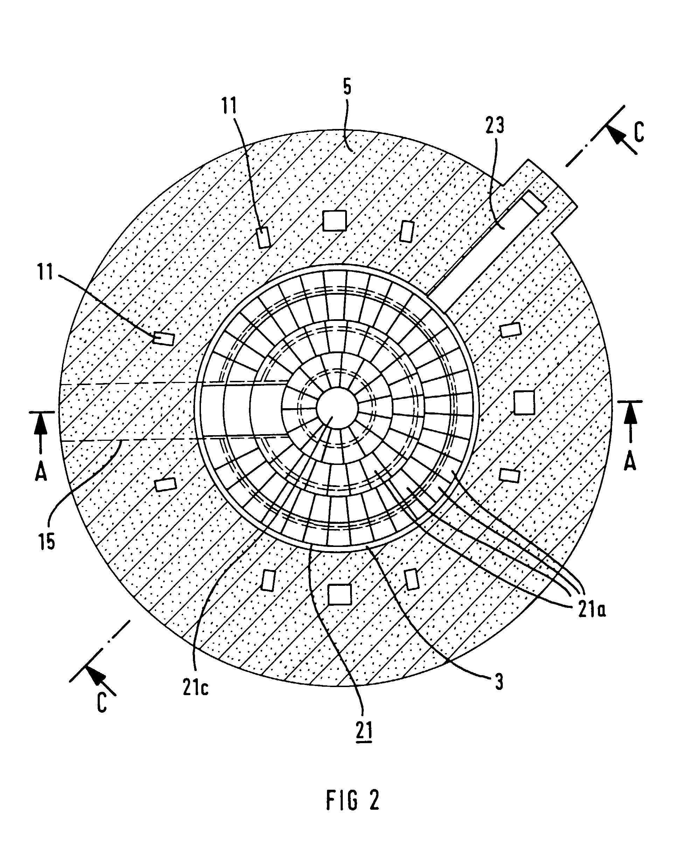

Die FIG 2, die einen Schnitt entlang der Linie E-E zeigt, erlaubt eine Draufsicht auf die Teilfüllkörper 21a und 21c. Die Teilfüllkörper 21a sind dabei in konzentrischen Ringen angeordnet und kreisringsektorförmig ausgebildet. Der zentrale Teilfüllkörper 21c ist dabei kreisförmig ausgebildet. Es ist auch gegebenenfalls denkbar, die Teilfüllkörper kreissektorförmig auszubilden. Wesentlich für ihre Bemessung ist, daß sie nachträglich bei eingebautem RDB 1 durch den Kanal 15 ein- und ausbringbar sind und durch ihren bausteinartigen Charakter einen homogenen Füllkörper bilden.

Um ihre Füllfunktion beim Austreten von Kernschmelze zu verlieren, müssen die Teilfüllkörper 21a bis 21c eine Schmelztemperatur aufweisen, die oberhalb der Temperatur des austretenden Wassers und unterhalb der der Kernschmelze liegt. Die Temperatur kann für das Wasser etwa 100 bis 350°C und für die Kernschmelze über 2000° C betragen. Die Schmelztemperatur des Füllkörpers 21 muß also im Bereich zwischen diesen Temperaturen liegen.

Bevorzugt sind die Teilfüllkörper 21a bis 21c als Hohlkörper ausgebildet. Sie können dabei je nach Bedarf auch mit einem Füllstoff, insbesondere mit einem Gas, ausgefüllt sein, so daß beim Schmelzen eine spezielle vorteilhafte Wirkung entsteht. Dies kann beispielsweise eine kühlende Wirkung sein. Als Material für die Teilfüllkörper 21a bis 21c eignet sich insbesondere Metall oder gegebenenfalls auch Glas. Diese Materialien sind leicht verarbeitbar und erlauben eine preiswerte Fertigung. Ein metallischer Füllkörper kann beispielsweise geschweißt sein. Ein Glasfüllkörper läßt sich dagegen blasen oder pressen.

Alternativ ist es auch denkbar, ein poröses Material, insbesondere einen Schaum oder ein keramisches, gebranntes oder gesintertes Material für die Teilfüllkörper 21a bis 21c zu verwenden. Diese lassen sich gegebenenfalls sehr einfach durch Schneiden herstellen, wobei das Einhalten der erforderlichen Schmelztemperatur zu beachten ist. Auch ein mineralischer Werkstoff, z.B. Beton, ist denkbar.

Gegebenenfalls läßt sich mit den Teilfüllkörpern 21 a, 21c, die direkt unterhalb der RDB-Kalotte angeordnet sind, eine Isolationswirkung erzielen, so daß dort eine zusätzliche Isolation - wie bisher üblich - nicht nötig ist. Gegebenenfalls ist auch ein vielschichtiger Aufbau des Füllkörpers 21 möglich, wobei für die einzelnen Schichten unterschiedliche Qualitäten von Teilfüllkörpern verwendet werden. In der FIG 3 ist dazu beispielhaft im Bereich der Reaktorgrubenbelüftung 26 eine zusätzliche Füllschicht 27 gezeigt.

## Patentansprüche

1. Anordnung zur Wasserverdrängung in einer unterhalb eines Reaktordruckbehälters (1) liegenden Vorkammer (13) zum Auffangen von Kernschmelze, mit einem Füllkörper (21), der sich aus einer Vielzahl von Teilfüllkörpern (21a bis 21c) zusammensetzt, die bausteinartig aneinanderfügbar sind, wobei der Füllkörper (21) eine Schmelztemperatur oberhalb 100°C und unterhalb der Temperatur der Kernschmelze hat
**dadurch gekennzeichnet,**, daß
- die Vorkammer (13) über einen Kanal (15) mit einer seitlichen Ausbreitungskammer (19) für die Kernschmelze verbunden ist,
- die Teilfüllkörper (21a bis 21c) derart dimensioniert sind, daß sie durch den Kanal (15) zur Vorkammer (13) ein- oder ausbringbar sind.

2. Anordnung nach Anspruch 1,
**dadurch gekennzeichnet,**
daß die Teilfüllkörper (21a bis 21c) durch einen Kanal (15) oder durch einen Tragschilddurchtritt zur Kammer (13) ein- oder ausbringbar sind.

3. Anordnung nach Anspruch 1 oder 2,
**dadurch gekennzeichnet,**
daß die Teilfüllkörper (21a, 21c)im Bereich des kalottenförmigen Bodens des Reaktordruckbehälters (1) kreissektor- oder kreisringsektorförmig ausgebildet sind.

4. Anordnung nach einem der Ansprüche 1 bis 3,
**dadurch gekennzeichnet,**
daß der Füllkörper (21) die Kammer (13) formschlüssig ausfüllt.

5. Anordnung nach einem der Ansprüche 1 bis 4,
**dadurch gekennzeichnet,**
daß der Füllkörper (21) einen Füllfaktor von mindestens 80 % in bezug auf die Kammergröße aufweist.

6. Anordnung nach Anspruch 5,
**dadurch gekennzeichnet,**
daß der Füllkörper (21) einen Füllfaktor von 90 % bis 98 % in bezug auf die Kammergröße aufweist.

7. Anordnung nach Anspruch 5 oder 6,
**dadurch gekennzeichnet,**
daß die in der Kammer (13) verbleibende Restwassermenge kleiner als 2 m³ ist.

8. Anordnung nach Anspruch 7,
**dadurch gekennzeichnet,**
daß die in der Kammer (13) verbleibende Restwassermenge kleiner als 1 m³ ist.

9. Anordnung nach einem der Ansprüche 1 bis 8,
**dadurch gekennzeichnet,**
daß die Teilfüllkörper (21a bis 21c) als Hohlkörper ausgebildet sind.

10. Anordnung nach Anspruch 9,
**dadurch gekennzeichnet,**
daß die Teilfüllkörper (21a bis 21c) aus Metall oder Glas gefertigt sind.

11. Anordnung nach Anspruch 9,
**dadurch gekennzeichnet,**
daß die Hohlkörper mit einem Füllstoff gefüllt sind.

12. Anordnung nach Anspruch 11,
**dadurch gekennzeichnet,**
daß die Hohlkörper mit Gas gefüllt sind.

13. Anordnung nach einem der Ansprüche 1 bis 8,
**dadurch gekennzeichnet,**
daß die Teilfüllkörper (21a bis 21c) aus einem porösen Material, einem Schaum, einem keramischen, gebrannten oder gesinterten Material oder einem betonartigen Material gefertigt sind.

14. Anordnung nach einem der Ansprüche 1 bis 13,
**dadurch gekennzeichnet,**
daß die Kammer (13) eine Ausbreitungskammer, Vorkammer (13) oder ein Kanal (15) für die Kernschmelze ist.

## Claims

1. Arrangement for water displacement in a prechamber (13) located underneath a reactor pressure vessel (1) and intended for the interception of core melt, with a filling body (21) which is composed of a multiplicity of partial filling bodies (21a to 21c) which can be joined to one another in a modular manner, the filling body (21) having a melting temperature above 100°C and below the temperature of the core melt,
characterized in that
- the prechamber (13) is connected to a lateral dispersion chamber (19) for the core melt via a duct (15)
- the partial filling bodies (21a to 21c) are dimensioned in such a way that they can be introduced or extracted through the duct (15) to the prechamber (13).

2. Arrangement according to Claim 1, characterized in that the partial filling bodies (21a to 21c) can be introduced or extracted through a duct (15) or through a supporting-shield passage to the chamber (13).

3. Arrangement according to Claim 1 or 2, characterized in that the partial filling bodies (21a, 21c) are designed in the form of a sector of a circle or sector of an annulus in the region of the dome-shaped bottom of the reactor pressure vessel (1).

4. Arrangement according to one of Claims 1 to 3, characterized in that the filling body (21) fills the chamber (13) positively.

5. Arrangement according to one of Claims 1 to 4, characterized in that the filling body (21) has a filling factor of at least 80% in respect of the chamber size.

6. Arrangement according to Claim 5, characterized in that the filling body (21) has a filling factor of 90% to 98% in respect of the chamber size.

7. Arrangement according to Claim 5 or 6, characterized in that the residual water quantity remaining in the chamber (13) is smaller than 2 m³.

8. Arrangement according to Claim 7, characterized in that the residual water quantity remaining in the chamber (13) is smaller than 1 m³.

9. Arrangement according to one of Claims 1 to 8, characterized in that the partial filling bodies (21a to 21c) are designed as hollow bodies.

10. Arrangement according to Claim 9, characterized in that the partial filling bodies (21a to 21c) are made from metal or glass.

11. Arrangement according to Claim 9, characterized in that the hollow bodies are filled with a filling material.

12. Arrangement according to Claim 11, characterized in that the hollow bodies are filled with gas.

13. Arrangement according to one of Claims 1 to 8, characterized in that the partial filling bodies (21a to 21c) are made from a porous material, a foam, a ceramic, baked or sintered material or a concrete-like material.

14. Arrangement according to one of Claims 1 to 13, characterized in that the chamber (13) is a dispersion chamber, a prechamber (13) or a duct (15) for the core melt.

## Revendications

1. Dispositif de refoulement d'eau logé dans un compartiment préalable (13) situé au-dessous de la cuve sous pression (1) d'un réacteur, pour capter un coeur en fusion, comportant un corps de remplissage (21) se composant d'un grand nombre de corps partiels de remplissage (21a à 21c) pouvant être assemblés modulairement, le corps de remplissage (21) présentant une température de fusion supérieure à 100°C et inférieure à la température du coeur en fusion,
caractérisé par le fait que
- le compartiment préalable (13) est relié, par l'intermédiaire d'un canal (15), à une chambre latérale de propagation (19) affectée au coeur en fusion,
- les corps partiels de remplissage (21a à 21c) sont dimensionnés de façon à pouvoir être insérés dans le compartiment préalable (13), ou en être extraits, en empruntant le canal (15).

2. Dispositif selon la revendication 1,
caractérisé par le fait
que les corps partiels de remplissage (21a à 21c) peuvent être insérés dans le compartiment (13), ou en être extraits, en empruntant un canal (15) ou un passage pratiqué dans un bouclier de support.

3. Dispositif selon la revendication 1 ou 2,
caractérisé par le fait
que les corps partiels de remplissage (21a, 21c) sont réalisés en forme de secteurs circulaires, ou de secteurs d'anneaux de cercles, dans la région du fond en forme de calotte de la cuve sous pression (1) du réacteur.

4. Dispositif selon l'une des revendications 1 à 3,
caractérisé par le fait
que le corps de remplissage (21) comble le compartiment (13) par concordance de formes.

5. Dispositif selon l'une des revendications 1 à 4,
caractérisé par le fait
que le corps de remplissage (21) présente un coefficient de remplissage d'au moins 80 % par rapport à la taille du compartiment.

6. Dispositif selon la revendication 5,
caractérisé par le fait
que le corps de remplissage (21) présente un coefficient de remplissage de 90 % à 98 % par rapport à la taille du compartiment.

7. Dispositif selon la revendication 5 ou 6,
caractérisé par le fait
que la quantité d'eau résiduelle, demeurant dans le compartiment (13), est inférieure à 2 m³.

8. Dispositif selon la revendication 7,
caractérisé par le fait
que la quantité d'eau résiduelle, demeurant dans le compartiment (13), est inférieure à 1 m³.

9. Dispositif selon l'une des revendications 1 à 8,
caractérisé par le fait
que les corps partiels de remplissage (21a à 21c) sont réalisés sous la forme de corps creux.

10. Dispositif selon la revendication 9,
caractérisé par le fait
que les corps partiels de remplissage (21a à 21c) sont fabriqués en métal ou en verre.

11. Dispositif selon la revendication 9,
caractérisé par le fait
que les corps creux sont emplis d'un matériau de garnissage.

12. Dispositif selon la revendication 11,
caractérisé par le fait
que les corps creux sont emplis de gaz.

13. Dispositif selon l'une des revendications 1 à 8,
caractérisé par le fait
que les corps partiels de remplissage (21a à 21c) sont fabriqués en un matériau poreux, en une mousse, en un matériau céramique, calciné ou fritté, ou bien en un matériau du type béton.

14. Dispositif selon l'une des revendications 1 à 13,
caractérisé par le fait
que le compartiment (13) est une chambre de propagation, un compartiment préalable (13) ou un canal (15) destiné(e) au coeur en fusion.
